Europäisches Patentamt

European Patent Office

Office européen des brevets

(11) Veröffentlichungsnummer: **0 193 520**
**A2**

(12) # EUROPÄISCHE PATENTANMELDUNG

(21) Anmeldenummer: 86890033.3

(22) Anmeldetag: 14.02.86

(51) Int. Cl.⁴: **G 08 C 19/46**
**H 02 K 24/00**

(30) Priorität: **27.02.85 DE 3506986**

(43) Veröffentlichungstag der Anmeldung:
**03.09.86 Patentblatt 86/36**

(84) Benannte Vertragsstaaten:
**AT CH DE FR GB IT LI SE**

(71) Anmelder: **VOEST-ALPINE-FRIEDMANN Gesellschaft m.b.H.**
**Muldenstrasse 5**
**A-4020 Linz(AT)**

(72) Erfinder: **Augesky, Christian, Dipl.-Ing.**
**Innstrasse 25/3/18**
**A-1200 Wien(AT)**

(72) Erfinder: **Ritzinger, George, Dipl.-Ing.**
**Kierlingerstrasse 59a**
**A-3400 Klosterneuburg(AT)**

(72) Erfinder: **Schmidt, Karl-Heinz, Dipl.-Ing.**
**Stuwerstrasse 13/2/12**
**A-1020 Wien(AT)**

(72) Erfinder: **Sterl, Norbert, Dr. Dipl.-Ing.**
**Johnstrasse 59a**
**A-1150 Wien(AT)**

(74) Vertreter: **Matschnig, Franz, Dipl.-Ing.**
**Siebensterngasse 54 Postfach 452**
**A-1071 Wien(AT)**

(54) **Drehmelder.**

(57) Dieser Drehmelder besitzt einen Stator (5), der zumindest zwei, um vorgegebene Winkel gegeneinander versetzte Signal-wicklungen aufweist, sowie einen, zumindest eine Erregerwicklung (9) tragenden Rotor (7).

Um zu einem im Aufbau einfachen und sehr kostengünstigen Drehmelder zu gelangen, der insbesondere im Zusammenhang mit Schrittmotoren zur Rückmeldung der durchgeführten Schritte eingesetzt werden kann, besteht der Stator (5) aus einzelnen Stabkernen (16, 18, 20, 22, 23), die bezüglich der Drehachse (1a) n-sternförmig oder in Form eines n-Eckes angeordnet und je mit einer Signalwicklung (17, 19, 21) versehen sind, wobei die Mittenebene der Stabkerne senkrecht zur Drehachse (1a) liegt. Der Rotor (7) weist einen Stab (8) auf, dessen Länge im wesentlichen dem Durchmesser des Stators (5) entspricht, wobei die Mittenebene des Rotorstabkernes (8) in Abstand von der Mittenebene des Stators (5) liegt.

Fig. 1

DREHMELDER

Die Erfindung bezieht sich auf einen Drehmelder mit einem Stator, der zumindest zwei, um vorgegebene Winkel gegeneinander versetzte Signalwicklungen aufweist und mit einem, zumindest eine Erregerwicklung tragenden Rotor.

Bei einem bekannten Drehmelder dieser Art, auch Resolver genannt (Firmenprospekt "Resolvers", Fa. Moore Reed, Nov. 1979), bestehen Rotor und Stator aus Blechpaketen und die Wicklungen sind in Nuten der Pakete eingelegt, d. h., der Aufbau entspricht dem üblicher Elektromotoren. Auf der Rotorwelle sitzt die ringförmige Sekundärwicklung des Einkoppeltransformators, die von der gleichfalls ringförmigen, feststehenden Primärwicklung unter Belassung eines Luftspaltes von außen umgeben ist.

Im Betrieb wird die Rotorwicklung über den Einkoppeltransformator mit einem tonfrequenten Signal gespeist. In zwei um 90° gegeneinander versetzten Wicklungen des Stators werden zwei Ausgangssignale induziert, aus welchen mittels analoger oder digitaler Technik die jeweilige Winkellage der Rotorachse eindeutig abgeleitet werden kann. Derartige Schaltungen gehören zum Stand der Technik und sind z.B. in Electronic Design 19, Sept. 13, p. 72ff (1975) beschrieben.

Der bekannte Drehmelder ist mechanisch sehr aufwendig gebaut, insbesondere die Herstellung der Rotor- und Statorwicklungen sowie der zugehörigen laminierten Kerne treibt die Kosten des Drehmelders in die Höhe.

Es wurde auch vorgeschlagen (DE-Anmeldung 34 32 395), für den Stator einen Ringkern zu verwenden, wodurch eine wesentliche Vereinfachung des Stataufbaues ermöglicht ist. Allerdings ist das Wickeln eines Ringkernes aufwendig und dementsprechend noch immer mit vergleichsweise hohen Kosten verbunden.

Ziel der Erfindung ist die Schaffung eines im Aufbau einfachen und sehr kostengünstigen Drehmelders, der insbesondere im Zusammenhang mit Schrittmotoren zur Rückmeldung der durchgeführten Schritte eingesetzt werden soll. Dementsprechend soll die Auflösung mindestens einen Schritt betragen, d. h. bei einem Schrittmotor, der z.B. 200 Schritte pro Umdrehung durchführt, mindestens $1,8°$ .

Dieses Ziel läßt sich mit einem Drehmelder der eingangs genannten Art erreichen, bei welchem erfindungsgemäß der Stator aus einzelnen Stabkernen besteht, die bezüglich der Drehachse n-sternförmig oder in Form eines n-Eckes angeordnet und je mit einer Signalwicklung versehen sind, wobei die Mittenebene der Stabkerne senkrecht zur Drehachse liegt und der Rotor einen Stab aufweist, dessen Länge im wesentlichen dem Durchmesser des Stators entspricht, wobei die Mittenebene des Rotorstabkernes in Abstand von der Mittenebene des Stators liegt.

Der erfindungsgemäße Stataufbau zeichnet sich durch einfache Herstellbarkeit und große Kostengünstigkeit aus. Insbesondere ist das Wickeln der Stabkerne auf einfachen Geräten vollautomatisch durchführbar, was im Vergleich zu den Lösungen nach dem Stand der Technik eine entscheidende Vereinfachung darstellt.

Mit einfachen Mitteln auswertbare Signale werden erhalten, wenn die Stabkerne zu einem geschlossenen n-Eck, vorzugsweise zu einem 4- oder 6-Eck, zusammengefügt sind.

Hiebei ist es in Hinblick auf geringe magnetische Streuungen zweckmäßig, wenn die zusammengefügten Enden der Stabkerne schräg angeschliffen sind.

Um den Einfluß allfälliger Exzentrizitäten zwischen Rotor und Stator auf die Ausgangssignale gering zu halten, kann man vier oder sechs Stabkerne vorsehen, wobei je zwei gegenüberliegende Wicklungen in Serie geschaltet sind.

Ein besonders einfacher und kostengünstiger Aufbau wird erhalten, wenn die Stabkerne des Stators auf einer Platte, insbesondere auf einer Printplatte od. dgl. angeordnet sind.

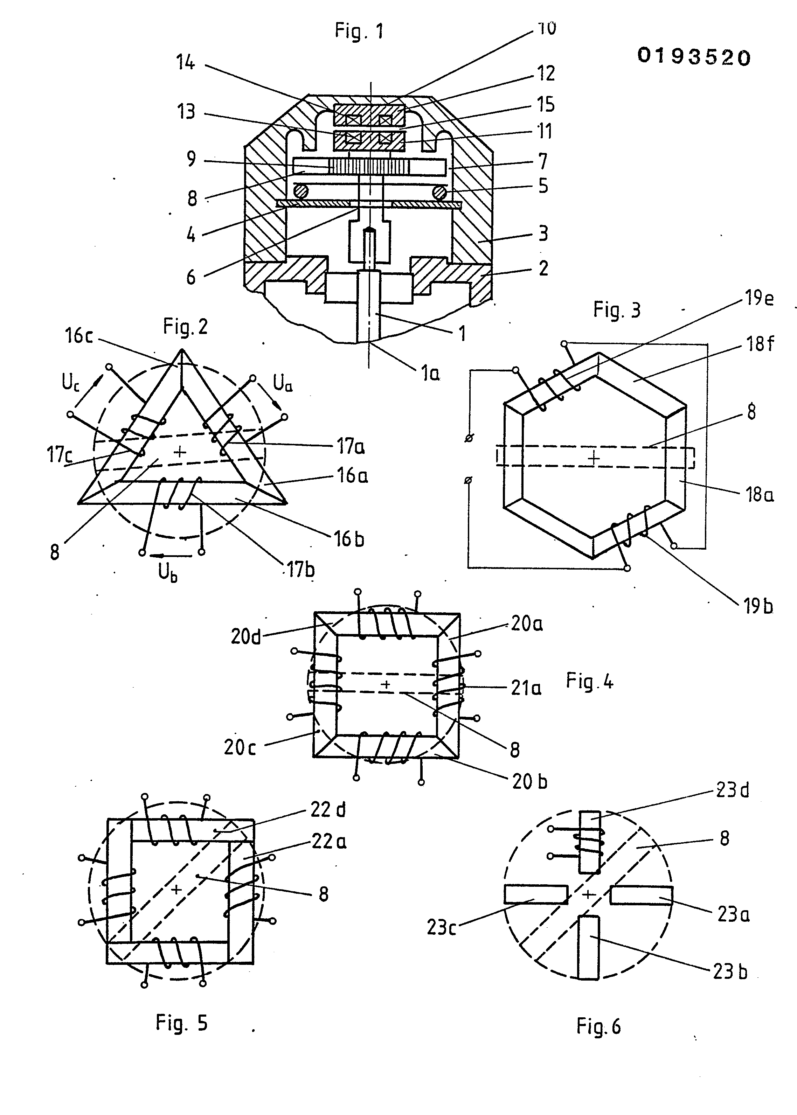

Die Erfindung samt ihren weiteren Vorteilen und Merkmalen ist im folgenden an Hand beispielsweiser Ausführungsformen näher erläutert, die in der Zeichnung veranschaulicht sind. In dieser zeigen Fig. 1 einen Längsschnitt durch einen Drehmelder nach der Erfindung, der an einem Schrittmotor angeordnet ist und die Fig. 2 bis 6 je in schematischer Ansicht in Richtung der Drehachse verschiedene Statorkonfigurationen nach der Erfindung.

In der Zeichnung ist die Kombination eines Drehmelders nach der Erfindung mit einem Schrittmotor dargestellt; von letzterem ist die Motorwelle 1 (Drehachse 1a) und ein Stirndeckel 2 ersichtlich. An den Stirndeckel 2 schließt das Gehäuse 3 des Drehmelders an, in dem eine Printplatte 4 gehalten ist. Auf dieser ist der ring- oder sternförmige Stator 5 des Drehmelders befestigt.

Die Motorwelle 1 bzw. eine Verlängerung derselben durchsetzt eine mittige Ausnehmung 6 der Printplatte 4 sowie den Stator 5 und ist an ihrem Ende mit einem Rotor 7 versehen. Dieser weist einen Stabkern 8 mit einer zylindrischen Erregerwicklung 9 auf.

Die Erregerwicklung 9 könnte zwar über Schleifringe angespeist werden, doch ist die im Beispiel gezeigte, schleifringlose Anspeisung über einen Drehtransformator 10 vorzuziehen. Dieser besteht aus zwei Schalenkernhälften 11, 12. Die eine Schalenkernhälfte 11 ist - rotationssymmetrisch ausgerichtet - an dem Rotor 7 angeordnet; ihre in die Kammer eingelegte Wicklung 13 ist mit der Erregerwicklung 9 des Stabkernes 8 verbunden. Die zweite, feststehende Schalenkernhälfte 12 ist an dem Gehäuse 3 befestigt; sie besitzt gleichfalls eine Wicklung 14, der das Erregersignal zugeführt wird. Die Schalenkernhälften 11, 12 liegen in axialsymmetrische Anordnung unter Belassung eines Luftspaltes 15 einander gegenüber.

In Fig. 2 ist ein möglicher Aufbau des Stators 5 aus drei Stabkernen 16a,b,c gezeigt, deren Achsen die Seiten eines regelmäßigen Dreiecks bilden. Der Umkreisradius dieses Dreiecks entspricht im wesentlichen dem Durchmesser des - hier strichliert eingezeichneten - Stabkernes 8 des Rotors 7. Jeder der Stabkerne 16a,b,c, besitzt eine zylindrische Signalwicklung 17a,b,c, die demgemäß um je 120° gegeneinander versetzt sind. Die Stabkerne 16a,b,c sind auf der Platte 4 (Fig. 1) aus nicht magnetisierbarem Material, z.B. auf einer Printplatte, befestigt, wobei die Wicklungsenden an die Leiterbahnen angelötet und die Stabkerne z.B. durch Kleben fixiert sein können.

Die Wicklungen 14 und 13 bilden die Primär- bzw. Sekundärwicklung des Drehtransformators 10. Bei Anspeisung der Primärwicklung 14 mit einem tonfrequenten Signal werden somit in den Signalwicklungen 17a,b,c Ausgangssignale $u_a, u_b, u_c$ induziert, die sich zu

$$u_a = u_o \; f(\vartheta) \cdot \cos(\omega t + \alpha)$$

$$u_b = u_o \; f(\vartheta + \frac{2\pi}{3}) \cos(\omega t + \alpha)$$

$$u_c = u_o \; f(\vartheta + \frac{4\pi}{3}) \cos(\omega t + \alpha)$$

ergeben, worin

$u_o$ .... Maximalwert des induzierten Signals

$\vartheta$ .... Verdrehungswinkel der Rotorwelle

$\alpha$ .... Rotor-Stator-Phasenverschiebung

$\omega$ .... Kreisfrequenz der Speisespannung

Die Funktion $f(\vartheta)$ ist durch die Geometrie der Rotor-Stator-Anordnung bestimmt und ist im vorliegenden Fall angenähert eine Sinus- bzw. Cosinusfunktion. Es ist ersichtlich, daß sich aus den drei Ausgangssignalen der Winkel $\vartheta$ berechnen läßt und daß an sich bereits zwei dieser Signale zur Berechnung des Winkels $\vartheta$ genügen. Es ist jedoch zweckmäßig, wenn man auf drei Ausgangssignale zurückgreifen kann, da sich dann z.B. die Division durch nullnahe Werte vermeiden läßt. Die Berechnung von $\vartheta$ kann nach bekannten Schaltungen in analoger oder digitaler Weise erfolgen und bildet nicht Gegenstand der vorliegenden Erfindung.

Der Stabkern 8 des Rotors 7 und die Stabkerne 16a,b,c des Stators bestehen bei sämtlichen Ausführungsformen vorzugsweise aus Ferrit, wodurch die Verwendung hoher Frequenzen, z.B. über 10 kHz, möglich ist. Hohe Frequenzen ermöglichen die Messung auch hoher Winkelgeschwindigkeiten $\Delta\vartheta/\Delta t$, führen zu geringeren Erregerleistungen und ermöglichen geringere Abmessungen.

In Fig. 3 ist eine Ausführungsform gezeigt, deren Stator-Stabkerne 18a bis 18f zu einem regelmäßigen 6-Eck zusammengefügt sind. Je zwei gegenüberliegende Wicklungen 19b,e sind hiebei in Serie geschaltet (nur für zwei Wicklungen gezeigt). Auf diese Weise erhält man Ausgangssignale, die weitgehend unbeeinflußt von möglichen Exzentrizitäten der Rotor-Stator-Anordnung sind.

Eine Ausführung mit vier, zu einem Quadrat zusammengefügten Stator-Stabkernen 20a,b,c,d ist in Fig. 4 gezeigt. Die vier Signalwicklungen 21a,b,c,d liefern vier um je $\pi/2$ bezüglich des Winkels $\vartheta$ verschobene Ausgangssignale zur Berechnung des Winkels $\vartheta$.

Bei den Ausführungen nach Fig. 2, 3 und 4 sind die zusammengefügten Enden der Stabkerne unter einem Winkel von 60°, 30° bzw. 45° angeschliffen, um geringe magnetische Streuungen zu erhalten.

Insbesondere bei Verwendung von Stabkernen mit quadratischem Querschnitt können die Stabkerne 22a,b,c,d auch in der in Fig. 5 gezeigten Weise zu einem Quadrat zusammengefügt sein.

Schließlich ist es auch möglich, die Stabkerne des Stators in einem Stern anzuordnen, was für vier Stabkerne 23a,b,c,d in Fig. 6 gezeigt ist. Die Achsen der Stabkerne verlaufen hiebei radial bezüglich der Drehachse 1a. Bei dieser Ausführungsform ist der Streufluß sehr groß und die Funktion $f(\vartheta)$ verwickelt, doch zeichnet sie sich durch einen besonders einfachen Aufbau aus.

Bei sämtlichen Ausführungsformen liegt, wie aus Fig. 1 ersichtlich ist, die Mittenebene der Stabkerne des Stators senkrecht zur Drehachse 1a, wobei die Mittenebene des Rotorstabkernes in Abstand von der Mittenebene der Stator-Stabkerne liegt.

Patentansprüche
----------------------------------

1. Drehmelder mit einem Stator, der zumindest zwei, um vorgegebene Winkel gegeneinander versetzte Signalwicklungen aufweist und mit einem, zumindest eine Erregerwicklung tragenden Rotor, dadurch gekennzeichnet, daß der Stator (5) aus einzelnen Stabkernen (16, 18, 20, 22, 23) besteht, die bezüglich der Drehachse (1a) n-sternförmig oder in Form eines n-Eckes angeordnet und je mit einer Signalwicklung (17, 19, 21) versehen sind, wobei die Mittenebene der Stabkerne senkrecht zur Drehachse (1a) liegt und daß der Rotor (7) einen Stab (8) aufweist, dessen Länge im wesentlichen dem Durchmesser des Stators (5) entspricht, wobei die Mittenebene des Rotorstabkernes (8) in Abstand von der Mittenebene des Stators (5) liegt.

2. Drehmelder nach Anspruch 1, dadurch gekennzeichnet, daß die Stabkerne (16, 18, 20, 22) zu einem geschlossenen n-Eck, vorzugsweise zu einem 4- oder 6-Eck, zusammengefügt sind.

3. Drehmelder nach Anspruch 2, dadurch gekennzeichnet, daß die zusammengefügten Enden der Stabkerne (16, 18, 20) schräg angeschliffen sind.

4. Drehmelder nach einem der Ansprüche 1 bis 3, dadurch gekennzeichnet, daß vier oder sechs Stabkerne (18) vorgesehen sind, wobei je zwei gegenüberliegende Wicklungen (19b, 19e) in Serie geschaltet sind.

5. Drehmelder nach einem der Ansprüche 1 bis 3, dadurch gekennzeichnet, daß die Stabkerne (16, 18, 20, 22, 23) des Stators (5) auf einer Platte, insbesondere auf einer Printplatte (4) od. dgl. angeordnet sind.

Fig. 1

Fig. 2

Fig. 3

Fig. 4

Fig. 5

Fig. 6

0193520